# EUROPÄISCHE PATENTSCHRIFT

(11) **EP 3 134 574 B1**
(45) Veröffentlichungstag und Bekanntmachung des Hinweises auf die Patenterteilung: **13.03.2019**
(21) Anmeldenummer: 15717802.1
(22) Anmeldetag: 01.04.2015
(51) Int. Cl.: E01B 23/06, B65G 47/64

(54) **SCHIENENSYSTEM, INSBESONDERE FÜR EINE ELEKTROPALETTENBAHN**
RAIL SYSTEM, IN PARTICULAR FOR AN ELECTRICAL PALLET CONVEYOR SYSTEM
SYSTÈME DE RAILS DESTINÉ EN PARTICULIER À UN CONVOYEUR ÉLECTRIQUE DE PALETTES

(30) Priorität: 25.04.2014 DE 102014006023
(43) Veröffentlichungstag der Anmeldung: 01.03.2017
(73) Patentinhaber: Eisenmann SE, 71032 Böblingen (DE)
(72) Erfinder: SCHENK, Konstantin, 70771 Leinfelden (DE); LUTZ, Mario, 71101 Schönaich (DE); VAN DER VLIST, Gerrit, 70176 Stuttgart (DE); JÄKLE, Dominik, 66125 Saarbrücken (DE)
(74) Vertreter: Ostertag & Partner Patentanwälte mbB
(86) Internationale Anmeldenummer: PCT/EP2015/000715
(87) Internationale Veröffentlichungsnummer: WO 2015/161916

(56) Entgegenhaltungen:
- EP-A2- 2 390 413
- DE-U1-202008 010 439
- GB-A- 2 391 034
- US-A- 4 109 584
- US-A1- 2012 273 624

## Beschreibung

Die Erfindung betrifft ein Schienensystem, insbesondere für eine Elektropalettenbahn, mit
a) einem Hauptgleis, das mindestens zwei stationäre parallele Schienen umfasst;
b) mindestens zwei einen Winkel einschließenden Nebengleisen, die jeweils ebenso viele stationäre parallele Schienen wie das Hauptgleis aufweisen; und
c) einer zwischen dem Hauptgleis und den Nebengleisen angeordneten Weiche, die umfasst:
   ca) für jede Schiene des Hauptgleises ebenso viele bewegliche Schienenabschnitte, wie es Nebengleise gibt, die in der Lage sind, wahlweise je nach ihrer Lage direkt oder indirekt die Schienen der verschiedenen Nebengleise mit den Schienen des Hauptgleises zu verbinden;
   cb) mindestens einen beweglichen Schieber, auf dem mehrere bewegliche Schienenabschnitte montiert sind;
   cc) mindestens einen Antrieb zum Bewegen des Schiebers; sowie
   cd) eine Steuereinrichtung, welche den mindestens einen Antrieb ansteuert.
   Während im älteren Stand der Technik häufig Weichen eingesetzt wurden, die ein Anhalten des über die Weiche fahrenden Fahrzeuges auf der Weiche während der Umstellung erforderlich machten, kommen in jüngster Zeit zunehmend kontinuierlich arbeitende Weichen in Einsatz, bei denen das Fahrzeug die Weiche ohne Halt überfahren kann. Die Vorteile derartiger kontinuierlich arbeitender Weichen sind offenkundig: Der Durchsatz an Fahrzeugen durch das Schienensystem ist größer, da im Bereich der Weichen keine Zeit für das Abbremsen, Anhalten und Wiederbeschleunigen des Fahrzeugs benötigt wird.
   Eine kontinuierlich arbeitende Weiche der eingangs genannten Art ist in EP 2 390 413 A2 oder in der DE 20 2008 010 439 U1 beschrieben.
   Hier sind die beweglichen Schienenabschnitte, die den beiden Schienen des Hauptgleises zugeordnet sind, alle zusammen auf einem linear beweglichen Schieber montiert. Der Schieber wiederum wird von einem einzigen Antrieb bewegt. Nachteilig bei dieser Anordnung ist zum einen, dass für unterschiedliche Spurbreiten unterschiedliche Komponenten, insbesondere unterschiedliche Schieber bereitgehalten werden müssen und dass darüber hinaus beim Umstellen der Weiche verhältnismäßig große Massen zu beschleunigen und zu bremsen sind, die insbesondere bei Montage des Schienensystems auf einem Stahlbau zu unterwünschten Vibrationen führen können.
   Aufgabe der vorliegenden Erfindung ist es daher, ein Schienensystem der eingangs genannten Art zu schaffen, das von einer bei unterschiedlichen Spurbreiten einsetzbaren Weiche Gebrauch macht und zudem im Betrieb beim Umschalten störungsfreier arbeitet.
   Diese Aufgabe wird erfindungsgemäß dadurch gelöst, dass
d) die der ersten Schiene des Hauptgleises zugeordneten beweglichen Schienenabschnitte auf einem ersten beweglichen Schieber und die der zweiten Schiene des Hauptgleises zugeordneten beweglichen Schienenabschnitte auf einem zweiten beweglichen Schieber montiert sind, der unabhängig von dem ersten Schieber bewegbar ist; und
e) jedem Schieber ein eigener Antrieb zugeordnet ist, der von der Steuereinrichtung gesondert ansteuerbar ist.
Bei dem erfindungsgemäßen Schienensystem werden somit im Bereich der Weiche im Wesentlichen nur solche Komponenten eingesetzt, die unabhängig von der Spurbreite ausgestaltet werden können. Auf diese Weise lassen sich höhere Stückzahlen erzielen und die Lagerhaltung vereinfachen, was insgesamt zu geringeren Kosten führt. Soweit bei unterschiedlichen Spurbreiten Anpassungen zu erfolgen haben, geschieht dies nur an stationären Schienen bzw. Schienenabschnitten.
Besonders bevorzugt wird, wenn die Steuereinrichtung so programmiert ist, dass sie die Antriebe der beiden dem Hauptgleis zugeordneten Schieber in zeitlichem Abstand ansteuert. Auf diese Weise wird erreicht, dass sich anders als bei der eingangs erwähnten DE 20 2008 010 439 U1 beim Umstellen der Weiche nicht sofort verhältnismäßig große Massen in Bewegung setzen, die dann auch wieder abgebremst werden müssen und entsprechende Vibrationen erzeugen. Vielmehr sind die zu einem bestimmten Zeitpunkt beschleunigten bzw. gebremsten Massen größenordnungsmäßig nur halb so groß und führen daher zu geringeren Störeinflüssen auf den Unterbau als bei dem genannter Stand der Technik.
Der zeitliche Abstand liegt zweckmäßigerweise zwischen 0,5 und 1 Sekunde und ist natürlich an den Einzelfall anzupassen.
Im Allgemeinen ist bei Weichen im Herz ein dritter Schieber vorgesehen, der mindestens einen beweglichen Schienenabschnitt trägt. Auch dieser kann einen eigenen, unabhängig ansteuerbaren Antrieb aufweisen, wobei erneut der Zeitpunkt bezogen auf die Zeitpunkte der Schaltung der anderen Schieber den Gegebenheit angepasst werden kann.

Ausführungsbeispiele der Erfindung werden nachfolgend anhand der Zeichnung näher erläutert; es zeigen:
- Figur 1: die Draufsicht auf ein eine Weiche enthaltendes Schienensystem mit einer ersten Spurbreite in einer ersten Weichenstellung;
- Figur 2: die Draufsicht auf das Schienensystem der Figur 1 in der anderen Weichenstellung;
- Figur 3: die Draufsicht auf ein eine Weiche enthaltendes Schienensystem mit einer zweiten Spurbreite in einer ersten Weichenstellung;
- Figur 4: die Draufsicht auf das Schienensystem der Figur 3 in der anderen Weichenstellung.

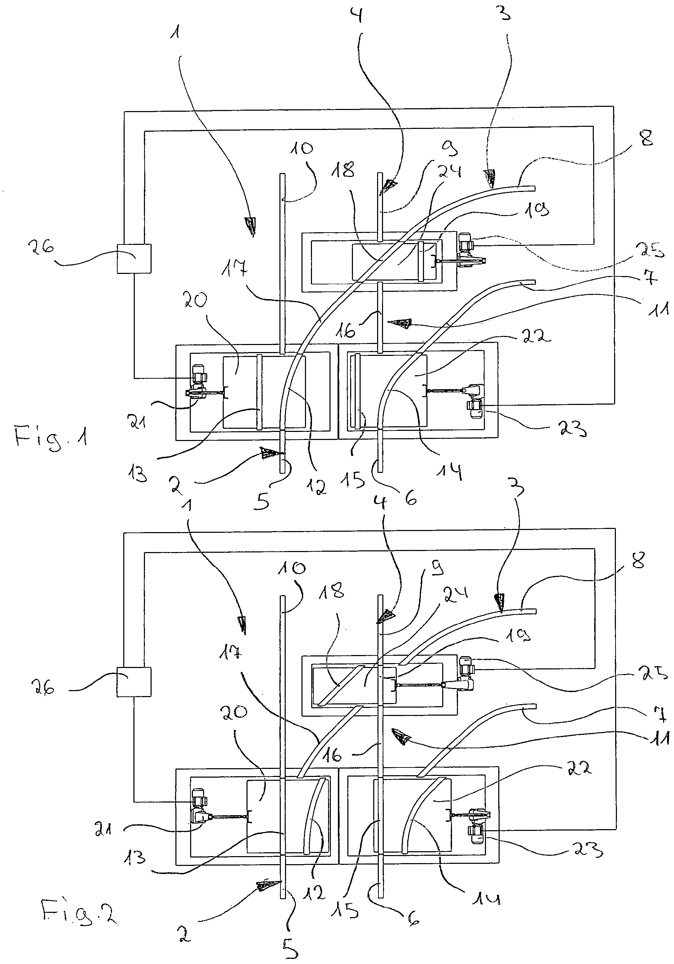

Zunächst wird auf die Figuren 1 und 2 Bezug genommen, in denen ein Schienensystem dargestellt ist, das insgesamt mit dem Bezugszeichen 1 gekennzeichnet ist und ein Hauptgleis 2 sowie zwei Nebengleise 3, 4 im dargestellten Ausschnitt umfasst. Jedes Gleis 2, 3, 4 umfasst zwei parallele Schienen 5, 6 bzw. 7, 8 bzw. 9, 10. Die Gleise 2, 3 und 4 und damit auch die Schienen 5, 6, 7, 8, 9, 10 sind stationär. Während das Nebengleis 4 in der geradlinigen Fortsetzung des Hauptgleises 2 liegt, zweigt das Nebengleis 3 unter einem bestimmten Winkel von dem anderen Nebengleis 4 ab.

Das Hauptgleis 2 kann mit Hilfe einer Weiche, die insgesamt das Bezugszeichen 11 trägt, wahlweise mit dem Nebengleis 3 oder dem Nebengleis 4 verbunden werden. Die Weiche 11 umfasst zwei in nachfolgend näher beschriebener Weise verschiebbare Schienenabschnitte 12, 13, welche der Schiene 5 zugeordnet sind, sowie zwei verschiebbare Schienenabschnitte 14, 15, welche der Schiene 6 zugeordnet sind. Der Schienenabschnitt 12 ist dabei so gekrümmt, dass er in einer seiner Schwenkpositionen, die in Figur 1 dargestellt ist, das Ende der stationären Schiene 5 des Hauptgleises 2 mit dem Ende eines gekrümmten stationär Schienen-Zwischenabschnittes 17 verbinden kann. Der Schienenabschnitt 13 der Weiche 11 ist geradlinig und besitzt eine solche Länge, dass er in einer Weichenposition, nämlich der, die in Figur 2 dargestellt ist, das Ende der stationären Schiene 5 des Hauptgleises 2 mit dem Ende der stationären Schiene 10 des Nebengleises 4 verbinden kann.
Der bewegliche Schienenabschnitt 14, welcher der Schiene 6 des Hauptgleises 2 zugeordnet ist, ist so gekrümmt und besitzt eine solche Länge, dass er in einer Weichenstellung, die in Figur 1 dargestellt ist, das Ende der Schiene 6 des Hauptgleises 2 mit dem Ende der Schiene 7 des Nebengleises 3 verbindet. Der geradlinige bewegbare Schienenabschnitt 15 der Weiche 11 schließlich besitzt eine solche Länge, dass er in einer zweiten Position,
die in Figur 2 dargestellt ist, das Ende der Schiene 6 des Hauptgleises 2 mit dem Ende eines stationären Schienen-Zwischenabschnitts 16 verbinden kann.
Die Weiche 11 umfasst schließlich noch einen beweglichen Schienenabschnitt 18, der im dargestellten Ausführungsbeispiel gerade ist und in der in Figur 1 dargestellten Position der Weiche 11 das dem Nebengleis 4 zugewandte Ende des stationären Schienen-Zwischenabschnitts 17 mit dem Ende der Schiene 8 des Nebengleises 3 verbinden kann. Ein weiterer geradliniger beweglicher Schienenabschnitt 19 ist so lang, dass er in der in Figur 2 dargestellten Position der Weiche 11 das der Schiene 9 zugewandte Ende des stationären Schienen-Zwischenabschnittes 16 mit dem Ende der Schiene 9 des Nebengleises 4 verbinden kann.
Die verschiebbaren Schienenabschnitte 12, 13, welche der Schiene 5 des Hauptgleises 2 zugeordnet sind, sind gemeinsam auf einem Schlitten 20 montiert, der mit Hilfe eines Antriebs 21 zwischen den beiden in Figur 1 und 2 dargestellten Positionen verfahren werden kann. Entsprechend sind die verschiebbaren Schienenabschnitte 14, 15, welche der stationären Schiene 6 des Hauptgleises 2 zugeordnet sind, gemeinsam auf einem Schlitten 22 montiert, der mit Hilfe eines Antriebs 23 zwischen den beiden in den Figuren 1 und 2 dargestellten Positionen verschoben werden kann. In entsprechender Weise schließlich sind die verschiebbaren Schienenabschnitte 18, 19, welche der Schiene 8 des Nebengleises 3 bzw. der Schiene 9 des Nebengleises 4 zugeordnet sind, auf einem gemeinsamen Schieber 24 montiert, der mit Hilfe eines Antriebs 25 zwiscen den beiden in den Figuren 1 und 2 dargestellten Positionen hin- und hergeschoben werden kann.

Die Weiche 11 wird von einer Steuereinrichtung 26 gesteuert, welche die Antriebe 21, 23 und 25 über die dargestellten Steuerleitungen mit Steuersignalen beaufschlagt. Dies geschieht im Einzelnen in folgender Weise:
Es sei angenommen, dass sich das Schienensystem 1 und die Weiche 11 zunächst in dem in Figur 1 dargestellten Zustand befinden, in welchem das Hauptgleis 2 mit dem Nebengleis 3 verbunden ist. Es soll nunmehr eine Umstellung auf den in Figur 2 dargestellten Zustand bewirkt werden, in welchem das Hauptgleis 2 mit dem Nebengleis 4 verbunden ist. Hierzu gibt die Steuereinrichtung 26 an alle drei Antriebe 21, 23, 25 entsprechende Steuersignale ab, welche zu der erforderlichen Verschiebung der Schieber 20, 22, 24 führt. Die Antriebe 21, 23 werden jedoch nicht exakt zum gleichen Zeitpunkt sondern mit einem gewissen Zeitversatz angesteuert, so dass sich die Schieber 20, 22 zu unterschiedlichen Zeitpunkten in Bewegung setzen. Dies hat den Vorteil, dass die Massen, die mit den Schiebern 20, 22 verbunden sind, nicht gleichzeitig beschleunigt werden, was mit erheblichen Erschütterungen und Vibrationen des Unterbaues verbunden sein könnte, auf dem diese beweglichen Teile aufgebaut sind. Dies gilt insbesondere für den Fall, in dem dieser Unterbau ein Stahlbau ist.

Wie groß der erforderliche Zeitversatz ist, ist nach den Einzelumständen zu bestimmen. Grundsätzlich sollte er so klein wie möglich sein, um die Taktzeiten der Weiche 11 nicht unnötig zu verlängern. Andererseits muss die Zeitspanne, die zwischen der Beschleunigung des einen Schiebers 20 und der Beschleunigung des anderen Schiebers 22 liegt, ausreichen, damit die gewünschte zeitliche Verteilung der Beschleunigungen erzielt wird. In vielen Fällen wird die geeignete Zeit zwischen einer halben Sekunde und einer Sekunde liegen.

Die Beaufschlagung des Antriebs 25, mit welchem der Schieber 24 verstellt wird, kann gleichzeitig mit der Beaufschlagung eines der beiden anderen Antriebe 21, 23 oder auch unabhängig von diesen erfolgen. Gegebenenfalls kann auch hier ein Zeitpunkt gewählt werden, der mit den Zeitpunkten der Ansteuerung der beiden anderen Schieber 20, 22 nicht übereinstimmt.

Soll eine erneute Umstellung des Schienensystems 1 von der in Figur 2 dargestellten Position in die in Figur 1 dargestellte Position erfolgen, gibt die Steuereinrichtung 26 an die Antriebe 21, 23, 25 wieder entsprechende Signale in der gewünschten zeitlichen Abfolge ab.

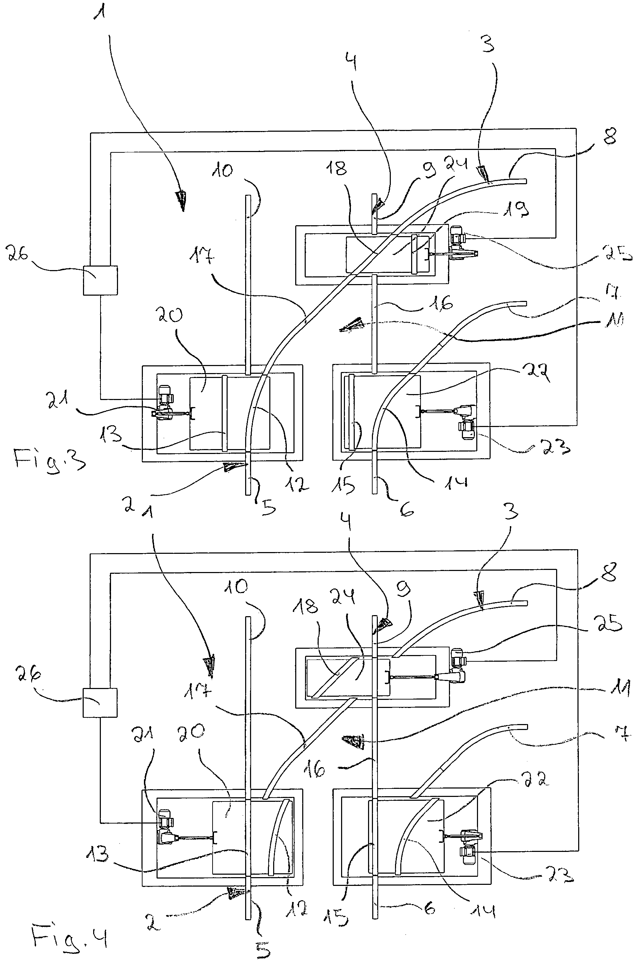

Die paarweise Aufteilung der verschiebbaren Schienenabschnitte 12, 13, 14, 15, 18, 19 auf drei Schieber 20, 22, 24 hat noch einen weiteren Vorteil: Die Schieber 20, 22, 24 mit den zugehörigen Antrieben 21, 23, 25 und den darauf befestigten Schienenabschnitten 12, 13, 14, 15, 18, 19 können unverändert bei unterschiedlichen Spurweiten des Schienensystems 1 eingesetzt werden. Dies ist in den Figuren 3 und 4 für ein Schienensystem 101 dargestellt, dessen Spurweite breiter als diejenige des Schienensystems 1 der Figuren 1 und 2 ist. Auf eine nähere Beschreibung dieses Schienensystems 1 kann im Übrigen verzichtet werden, da die Funktionsweise völlig mit der oben beschriebenen Funktionsweise des Schienensystems 1 übereinstimmt.

Beim oben geschilderte Ausführungsbeispiel wurden lineare Bewegungen der verschiedenen Schieber 20, 22, 24 eingesetzt. Selbstverständlich sind hier aber auch Schwenkbewegungen möglich.

## Patentansprüche

1. Schienensystem (1), insbesondere für eine Elektropalettenbahn, mit
a) einem Hauptgleis (2), das mindestens zwei stationäre parallele Schienen (5, 6) umfasst;
b) mindestens zwei einen Winkel einschließenden Nebengleisen (3, 4), die jeweils ebenso viele stationäre parallele Schienen (7, 8, 9, 10) wie das Hauptgleis (2) aufweisen; und
c) einer zwischen dem Hauptgleis (2) und den Nebengleisen (3, 4) angeordneten Weiche (11), die umfasst:
ca) für jede Schiene (5, 6) des Hauptgleises (2) ebenso viele bewegliche Schienenabschnitte (12, 13, 14, 15), wie es Nebengleise (3, 4) gibt, die in der Lage sind, wahlweise je nach ihrer Lage direkt oder indirekt die Schienen (7, 8, 9, 10) der verschiedenen Nebengleise (3, 4) mit den Schienen (5, 6) des Hauptgleises (2) zu verbinden;
cb) mindestens einen beweglichen Schieber (20, 22, 24), auf dem mehrere bewegliche Schienenabschnitte (12, 13, 14, 15) montiert sind;
cc) mindestens einen Antrieb (21, 23, 25) zum Bewegen des Schiebers (20, 22, 24) ; sowie
cd) eine Steuereinrichtung (26), welche den mindestens einen Antrieb (21, 23, 25) ansteuert;
**dadurch gekennzeichnet, dass**
d) die der ersten Schiene (5) des Hauptgleises (2) zugeordneten beweglichen Schienenabschnitte (12, 13) auf einem ersten beweglichen Schieber (20) und die der zweiten Schiene (6) des Hauptgleises (2) zugeordneten beweglichen Schienenabschnitte (14, 15) auf einem zweiten beweglichen Schieber (22) montiert sind, der unabhängig von dem ersten Schieber (20) bewegbar ist; und
e) jedem Schieber (20, 22) ein eigener Antrieb (21, 23) zugeordnet ist, der von der Steuereinrichtung (26) gesondert ansteuerbar ist.

2. Schienensystem (1) nach Anspruch 1, **dadurch gekennzeichnet, dass** die Steuereinrichtung (26) im Betrieb so programmiert ist, dass sie die Antriebe (21, 23) der beiden den Hauptgleisen (2) zugeordneten Schieber (20, 22) in zeitlichem Abstand ansteuert.

3. Schienensystem (1) nach Anspruch 2, **dadurch gekennzeichnet, dass** der zeitliche Abstand im Betrieb zwischen 0,5 und 1 Sekunde beträgt.

4. Schienensystem (1) nach einem der vorhergehenden Ansprüche, **dadurch gekennzeichnet, dass** ein dritter beweglicher Schieber (24) im Herz der Weiche (11) vorgesehen ist, der mindestens einen beweglichen Schienenabschnitt (18, 19) trägt und der einen eigenen, unabhängig ansteuerbaren Antrieb (25) aufweist.

## Claims

1. Rail system (1), in particular for an electrical pallet railway, having
a) a main track (2) comprising at least two stationary parallel rails (5, 6);
b) at least two secondary tracks (3, 4), which enclose an angle and each have as many stationary parallel rails (7, 8, 9, 10) as the main track (2); and
c) a switch point (11) arranged between the main track (2) and the secondary tracks (3, 4), the switch point (11) comprising:
ca) as many movable rail sections (12, 13, 14, 15) for each rail (5, 6) of the main track (2) as there are secondary tracks (3, 4), the movable rail sections (12, 13, 14, 15) being able to connect the rails (7, 8, 9, 10) of the different secondary tracks (3, 4) to the rails (5, 6) of the main track (2), optionally directly or indirectly, depending on their position;
cb) at least one movable slide (20, 22, 24), on which a plurality of movable rail sections (12, 13, 14, 15) are mounted;
cc) at least one drive (21, 23, 25) for moving the slide (20, 22, 24); and
cd) a control device (26), which actuates the at least one drive (21, 23, 25);
**characterised in that**
d) the movable rail sections (12, 13) associated with the first rail (5) of the main track (2) are mounted on a first movable slide (20) and the movable rail sections (14, 15) associated with the second rail (6) of the main track (2) are mounted on a second movable slide (22), which can be moved independently of the first slide (20);
e) each slide (20, 22) is assigned an individual drive (21, 23), which can be actuated separately by the control device (26).

2. Rail system (1) according to claim 1, **characterised in that** in operation the control device (26) is programmed such that it actuates the drives (21, 23) of the two slides (20, 22) associated with the main track (2) in time intervals.

3. Rail system (1) according to claim 2, **characterised in that** the time interval is between 0,5 and 1 second.

4. Rail system (1) according to any one of the preceding claims, **characterised in that** a third movable slide (24) is provided at the frog of the switch point (11), the third movable slide (24) supporting at least one movable rail section (18, 19) and having an individual drive (25) that can be actuated independently.

## Revendications

1. Système de rails (1), destiné en particulier à un convoyeur électrique de palettes, avec
a) une voie principale (2), qui comprend au moins deux rails parallèles stationnaires (5, 6);
b) au moins deux voies secondaires (3, 4) formant un angle, qui présentent respectivement autant de rails parallèles stationnaires (7, 8, 9, 10) que la voie principale (2); et
c) un aiguillage (11) disposé entre la voie principale (2) et les voies secondaires (3, 4), qui comprend:
ca) pour chaque rail (5, 6) de la voie principale (2) autant de parties de rail mobiles (12, 13, 14, 15) qu'il y a de voies secondaires (3, 4), qui sont en mesure, au choix selon leur position, de relier directement ou indirectement les rails (7, 8, 9, 10) des différentes voies secondaires (3, 4) aux rails (5, 6) de la voie principale (2);
cb) au moins un coulisseau mobile (20, 22, 24), sur lequel plusieurs parties de rail mobiles (12, 13, 14, 15) sont montées;
cc) au moins un entraînement (21, 23, 25) pour le déplacement du coulisseau (20, 22, 24); ainsi que
cd) un dispositif de commande (26), qui commande ledit au moins un entraînement (21, 23, 25);
**caractérisé en ce que**
d) les parties de rail mobiles (12, 13) associées au premier rail (5) de la voie principale (2) sont montées sur un premier coulisseau mobile (20) et les parties de rail mobiles (14, 15) associées au second rail (6) de la voie principale (2) sont montées sur un deuxième coulisseau mobile (22), qui est déplaçable indépendamment du premier coulisseau (20) ; et
e) un entraînement propre (21, 23) est associé à chaque coulisseau (20, 22), lequel peut être commandé séparément par le dispositif de commande (26).

2. Système de rails (1) selon la revendication 1, **caractérisé en ce que** le dispositif de commande (26) est programmé en fonctionnement, de telle manière qu'il commande à distance temporelle les entraînements (21, 23) des deux coulisseaux (20, 22) associés à la voie principale (2).

3. Système de rails (1) selon la revendication 2, **caractérisé en ce que** la distance temporelle vaut en fonctionnement entre 0,5 et 1 seconde.

4. Système de rails selon l'une quelconque des revendications précédentes, **caractérisé en ce qu'**il est prévu dans le coeur de l'aiguillage (11) un troisième coulisseau mobile (24), qui porte au moins une partie de rail mobile (18, 19) et qui présente un entraînement propre (25), pouvant être commandé de façon indépendante.
